Europäisches Patentamt

European Patent Office

Office européen des brevets

(11) Veröffentlichungsnummer: **0 241 564**
**A1**

## (12) EUROPÄISCHE PATENTANMELDUNG

(21) Anmeldenummer: **86104918.7**

(22) Anmeldetag: **10.04.86**

(51) Int. Cl.4: **B01D 5/00** , D01F 13/02

(43) Veröffentlichungstag der Anmeldung:
**21.10.87** Patentblatt **87/43**

(84) Benannte Vertragsstaaten:
**AT CH DE FR GB IT LI**

(71) Anmelder: **Ebner & Co. KG Anlagen und Apparate**
**Industriestrasse 8**
**D-6419 Eiterfeld(DE)**

(72) Erfinder: **Ebner, Karl**
**Theodor-Heuss-Strasse 3**
**D-6370 Oberursel/Ts.(DE)**
Erfinder: **Ebner, Stefan, Dipl.-Ing.**
**Theodor-Heuss-Strasse 3**
**D-6370 Oberursel/Ts.(DE)**

(74) Vertreter: **Jaeger, Klaus, Dipl.-Chem. Dr.**
**JAEGER & PARTNER Patentanwälte**
**Pippinplatz 4a**
**D-8035 Gauting(DE)**

(54) Verfahren und Anlage zur Mischkondensation von Dämpfen.

(57) Verfahren zur mehrstufigen Mischkondensation von Dämpfen, insbesondere von Dämpfen, die bei der Regenerierung von Spinnbadlösungen anfallen, wobei die in den Mischkondensatoren [9,10,11] freigesetzte Wärme mittels Oberflächenkondensatoren [15,16,17] zur Erwärmung einer Betriebsflüssigkeit genutzt wird. Jeder Kondensationsstufe ist ein separater Mischkondensator mit eigenem Mischkondensatorkreislauf [12,13,14] für die verwendete Kühllösung sowie ein Rückkühler zur Erwärmung der Betriebsflüssigkeit zugeordnet. Das Verfahren ist dadurch gekennzeichnet, daß der Überlauf [21,22] aus jedem Mischkondensatorkreislauf in den nächst kühleren Mischkondensator überführt und die Betriebsflüssigkeit im Gegenstrom zur Kühllösung der Mischkondensatoren im System der miteinander verbundenen Rückkühler geführt ist.

EP 0 241 564 A1

FIG 1

## Verfahren und Anlage zur Mischkondensation von Dämpfen

Die Erfindung betrifft ein Verfahren und eine Vorrichtung zur mehrstufigen Mischkondensation von Dämpfen der im Oberbegriff des Anspruchs 1 beschriebenen Art. Insbesondere betrifft die Erfindung ein Verfahren und eine Vorrichtung zur Regenerierung von Spinnbadlösungen, wie sie bei der Zellwollherstellung anfallen.

Bei der Herstellung von Zellwolle fallen Spinnbadlösungen an, die beträchtliche Mengen an - schwefelhaltigen Verbindungen, insbesondere Natriumsulfat, enthalten. Die verbrauchten Spinnbadlösungen können, zumindest ein gewisser Teil hiervon, in den Zellwollherstellungsprozeß nach Regenerierung zurückgeführt werden. Dies geschieht, indem die verbrauchten Spinnbadlösungen näherungsweise adiabatisch unter Abkühlung eingeengt werden, so daß das in der Spinnbadlösung gelöste Natriumsulfat in Kristallisatoren ausgeschieden werden kann.

Bei den bereits bekannten Anlagen zur Spinnbadregenerierung wird die Spinnbadlösung in hintereinandergeschalteten Vakuumkristallisatoren unter Abkühlung eingeengt und die abgezogenen Brüden Mischkondensatoren zugeführt. Da die Spinnbäder bis etwa 0 °C abgekühlt werden müssen, um das Natriumsulfat rasch und in ausreichendem Umfang aus den Spinnbadlösungen abzuscheiden, werden die Mischkondensatoren mit einer Kühllösung, die im wesentlichen aus Wasser und einem eine Siedepunktserhöhung bewirkenden Stoff, üblicherweise NaOH, beaufschlagt. Die bei der Kondensation der Brüden in den mit wässriger NaOH beaufschlagten Mischkondensatoren freigesetzte Wärme wird an die Umgebung bzw. an Rückkühler, die mit den Mischkondensatoren gekoppelt sind, abgeführt und geht daher verloren.

Ein weiterer Nachteil der mit NaOH arbeitenden Kondensationsanlagen besteht darin, daß die Spinnbadbrüden einer Vorreinigung, zum Beispiel einer Wäsche mit NaOH, unterzogen werden müssen, da die in den Mischkondensatoren verwendete NaOH wegen ihrer weiteren Verwendung zur Aufbereitung von Viskose sehr rein sein muß und daher nur in geringem Umfang durch die Substanzen des Spinnbades kontaminiert werden darf.

Angesichts dieses Standes der Technik liegt der Erfindung die Aufgabe zugrunde, ein Verfahren und eine Anlage zur mehrstufigen Mischkondensation von Dämpfen zu schaffen, das es erlaubt, die bei der Kondensation der Dämpfe freiwerdende Wärme verbessert zu nutzen. Insbesondere eignet sich das erfindungsgemäße Verfahren und die Anlage zur Anwendung bei der Regnerierung von Spinnbadlösungen aus Viskosespinnanlagen.

Zur Lösung dieser Aufgabe wird ein Verfahren der eingangs genannten Art geschaffen, das erfindungsgemäß die im kennzeichnenden Teil des Anspruchs 1 genannten Merkmale aufweist. Die durch die Erfindung geschaffene Anlage speziell zum Regenerieren von Spinnbadlösungen aus Viskosespinnanlagen weist die im kennzeichnenden Teil des Anspruches 9 genannten Merkmale auf.

Weitere Ausgestaltungen der Erfindung sind Gegenstand der Unteransprüche.

Die Erfindung ist also im wesentlichen dadurch gekennzeichnet, daß die in mehreren, in Reihe aufeinanderfolgenden Dampfquellen, beispielsweise Vakuumkristallisatoren, erzeugten Dämpfe in Mischkondensatoren mit eigenen Mischkondensatorkreislaufsystemen kondensiert werden, wobei die verwendete Kühllösung (I) an den jeweils nächstkühleren Mischkondensator weitergeleitet wird und die in den Kondensatoren erzeugte Wärme auf ein Kühlmedium (II) mittels als Oberflächenkühler ausgebildeter Rückkühler, die in die individuellen Mischkondensatorkreislaufsysteme integriert sind, übertragen wird; dabei wird das Kühlmedium (II) im Gegenstrom zur Kühllösung (I) geführt, so daß das Kühlmedium (II) aus einem Rückkühler in den nächst wärmeren Mischkondensatorkreislauf überführt und das aufgeheizte Kühlmedium (II) schließlich aus dem Rückkühler des wärmsten Mischkondensatorkreislaufes ausgetragen wird. Die Temperatur eines Mischkondensator kreislaufes und der Wassergehalt bzw. die Siedepunktserhöhung der zugehörigen Kühllösung (I) sind in der Weise aufeinander abgestimmt, daß Temperatur und Siedepunktserhöhung der Kühllösung (I) parallel zueinander von Mischkondensator zu Mischkondensator abnehmen. Dadurch wird erreicht, daß auch die Mischkondensatoren, deren Kühllösung (I) einen hohen Wassergehalt und daher eine niedrigere Siedepunktserhöhung aufweisen, die eingespeisten Dämpfe noch in wirksamer Weise kondensieren können. Schließlich wird dadurch, daß das in den Rückkühlern aufgeheizte Kühlmedium (II) im Gegenstrom zur Kühllösung (I) geführt wird, erreicht, daß das Kühlmedium (II) unter Nutzung der in den Mischkondensatoren freigesetzten Wärme auf ein beträchtliches Temperaturniveau aufgeheizt werden kann. Dabei liegt die Endtemperatur des aufgeheizten Kühlmediums (II) unter der Temperatur des wärmsten Mischkondensatorkreislaufes und in Normalfall über der Temperatur des in diesen Mischkondensatorkreislauf eingespeisten Dampfes.

Ein weiterer Vorzug des .erfindungsgemäßen Verfahrens ist darin zu sehen, daß speziell bei der Regenerierung von Spinnbadlösungen eine Vorwäsche der in die Mischkondensatoren eingespeisten Brüden nicht erforderlich ist, da die Kontamination der als Kühllösung (I) üblicherweise verwendeten Schwefelsäure deren weitere Verwendung bei der Viskoseverarbeitung nicht stört.

Als Kühllösung (I) wird bevorzugt konzentrierte Schwefelsäure verwendet, da diese eine Siedepunktserhöhung von über 100 °C hat, so daß in den Mischkondensatorkreislaufsystemen Temperaturen von etwa bis zu 90 °C eingestellt werden können. Im Prinzip kann jedoch jede beliebige Lösung eines Stoffes, der ausreichend hygroskopisch ist und daher in wässriger Lösung den Dampfdruck der Lösung gegenüber reinem Wasser aus reichend reduziert, in den Mischkondensatoren als Kühllösung (I) verwendet werden. Grundsätzlich ist bei Wahl einer Kühllösung (I) darauf zu achten, daß bei der gewünschten Temperatur im Mischkondensatorkreislauf und der vorgegebenen Dampftemperatur des in den Mischkondensator eingespeisten Dampfes die Siedepunktserhöhung der Kühllösung (I) ausreicht, den eingespeisten Dampf zu kondensieren.

Vorzugsweise weist die Kühlflüssigkeit (I) eine Siede punktserhöhung von mindestens 20 °C, insbesondere von mindestens 40 °C auf. Besonders bevorzugt sind Kühlflüssigkeiten (I), deren Siedepunktserhöhung 80 °C übersteigt.

Besonders bevorzugt ist als Kühllösung (I) eine konzentrierte Schwefelsäure, die mindestens 90 %ig, insbesondere 97 bis 99 %ig ist.

Bei dem Kühlmedium (II) handelt es sich im allgemeinen um eine Betriebsflüssigkeit, die auf eine bestimmte Temperatur zu erwärmen ist. Bei der Betriebsflüssigkeit kann es sich beispielsweise um Wasser handeln, das nach seiner Erwärmung an einer anderen Stelle als Heizmedium genutzt wird.

Bevorzugt ist auch eine Ausgestaltung der Erfindung, bei der das nach Kristallisation von Natriumsulfat befreite kalte Spinnbad vor seiner Rückführung in den Spinnprozeß durch das System der Rückkühler der erfindungsgemäßen Anlage geschickt wird, um es auf die erforderliche Prozeßtemperatur zu erwärmen. Dadurch kann der Frischdampf, der sonst zur Aufheizung des abgekühlten und regenerierten Spinnbades erforderlich ist, eingespart werden.

Im Falle der Spinnbadregenerierung, bei der das Spinnbad stufenweise in Vakuumkristallisatoren durch Entspannungsver dampfung abgekühlt wird, wird der aus der ersten Kristallisationsstufe stammende wärmste Brüden in den kältesten Mischkondensator, dessen Kühllösung (I) die niedrigste Siedepunktserhöhung aufweist, und der aus der letzten Vakuumkristallisationsstufe stammende kälteste Brüden in den wärmsten Mischkondensator, dessen Kühllösung (I) die höchste Siedepunktserhöhung aufweist, eingeleitet. Durch diese Maßnahme wird erreicht, daß die kälteren Mischkondensatoren, deren Kondensationsflüssigkeit (I) schon ziemlich wasserhaltig ist, mit relativ warmem Brüden in Kontakt gebracht werden.

Wenn nach dem erfindungsgemäßen Verfahren die Betriebsflüssigkeit auf möglichst hohe Temperaturen gebracht werden soll, empfiehlt es sich, das zu regenerierende Spinnbad teilweise in einem Entspannungsverdampfer einzuengen, ehe es in die erste Vakuumkristallisationsstufe gelangt. Dadurch wird erreicht, daß weniger kondensierter Brüden bei weiterer Aufarbeitung der Spinnbadlösung in den Vakuumkristallisationsstufen in die Kühllösung (I) bzw. Schwefelsäure der Mischkondensatoren gelangt, so daß diese wegen des so bedingten niedrigeren Wassergehaltes der Schwefelsäure auf einem höheren Temperaturniveau gehalten werden können, ohne daß Gefahr besteht, daß die Brüden nicht mehr kondensiert werden können.

Entsprechend einer weiteren bevorzugten Ausgestaltung der Erfindung wird dem wärmstem Mischkondensatorkreislauf nicht Brüden aus der Vakuumristallisationsanlage, sondern statt dessen die gesamte feuchte Abluft aus allen vorgeschalteten Mischkondensatoren zugeführt. Dieser Mischkondensator, der relativ klein sein kann, ist an eine Dampfstrahlapparatur angeschlossen. Da die abzusaugenden Luft in diesem Mischkondensator nahezu vollständig von Brüden befreit wird, muß weniger Abluft abgesaugt werden, so daß Energie zum Betreiben der Dampfstrahlapparatur eingespart werden kann.

Die Erfindung ist im folgenden anhand eines Ausführungsbeispieles unter Bezug auf die Anwendung des Verfahrens auf die bei der Regenerierung von Spinnbadlösungen aus Viskosespinnanlagen entstehenden Dämpfe in Verbindung mit der Zeichnung näher erläutert. Es zeigt die einzige Figur, nämlich die

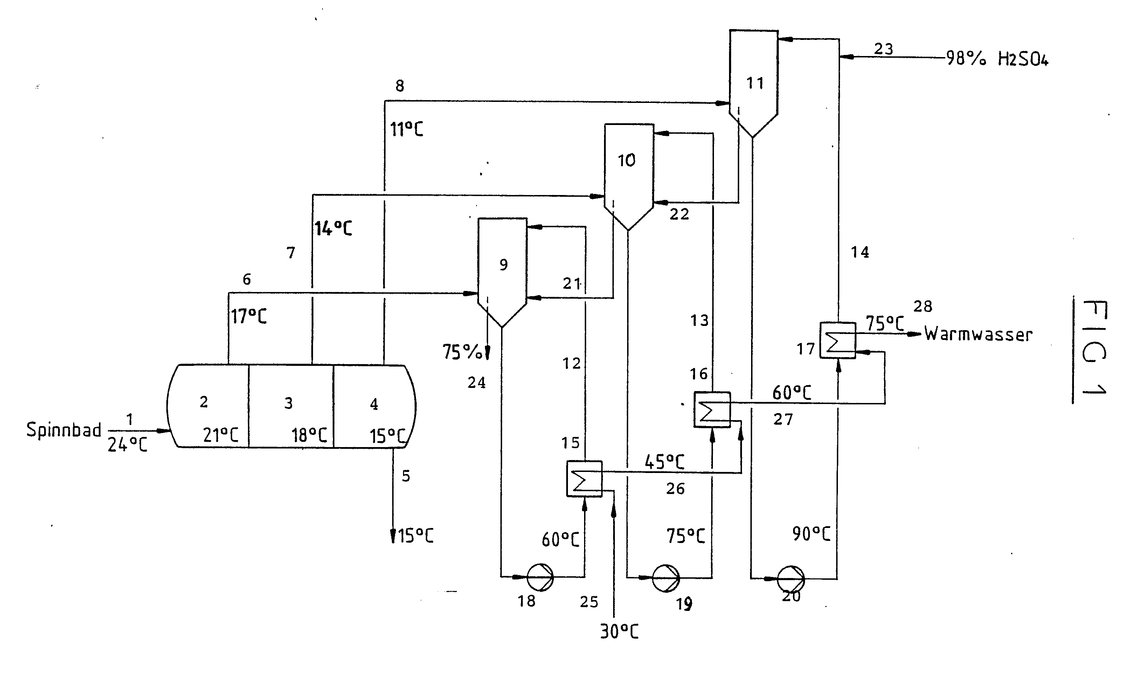

Fig. 1 in schematischer Darstellung ein Blockschaltbild einer Anlage zur Durchführung des Verfahrens der Erfindung.

Das. in der Fig. 1 gezeigte Ausführungsbeispiel zeigt eine Anlage zum stufenweisen Abkühlen einer Viskosespinnbadlösung mit Brüdenkondensation in und für jede Abkühlungsstufe.

Das zu regenerierende Spinnbad wird über eine Rohrleitung 1 in drei hintereinandergeschaltete Kristallisatorstufen 2, 3 und 4 eingeleitet. Es empfiehlt sich, das zu regenerierende Spinnbad vor Einspeisung in die Kristallisatorstufen von einem Teil des zu verdampfenden Wassers zu befreien und dabei vorzukühlen. Dies ist möglich, wenn den Kristallisatorstufen ein Vorkühler vorgeschaltet ist, dessen Brüden in einen Mischkondensator, der mit kaltem Wasser als Kühlmedium beaufschlagt wird, eingeleitet werden. In dem in Fig. 1 dargestellten Ausführungsbeispiel wird so ein Spinnbad mit einer Temperatur von 40 °C auf 24 °C vorgekühlt.

In den fünf Kristallisatorstufen, bei denen es sich um Vakuumkristallisatoren handelt, findet eine stufenweise Abkühlung der Spinnbadlösung auf 15 °C statt. Das auf 15 °C abgekühlte Spinnbad wird dann über eine Rohrleitung 5 aus der letzten Kristallisatorstufe abgeführt. Das abgekühlte Spinnbad kann dann, gegebenenfalls nach weiterer Abkühlung mit einem beliebigen geeigneten Kühlsystem, einem Eindicker und einer Zentrifuge (in Fig. 1 nicht dargestellt) zur Abtrennung des Kristallbreies aus dem regenerierten Spinnbad zugeführt werden.

Der in dem ersten Kristallisator 2 entstehende Brüden wird über eine Rohrleitung 6 einem ersten Mischkondensator 9 zugeführt. Über die Kreislaufleitung 12 wird unter Zwischenschaltung einer Pumpe 18 und eines Rückkühlers 15 ein Mischkondensatorkreislauf für die Kühllösung, hier speziell Schwefelsäure, hergestellt.

In gleicher Weise wird der in der zweiten Kristallisatorstufe erzeugte Brüden über eine Rohrleitung 7 in den Mischkondensator 10 eingeführt und dort kondensiert. Dem Mischkondensator 10 ist eine Kreislaufleitung 13, eine Pumpe 19 zur Umwälzung der Kühlflüssigkeit (I) und ein Rückkühler 16 zugeordnet.

Der in dem dritten Kristallisator 4 entstehende Brüden gelangt über eine Leitung 8 in den Mischkondensator 11, dessen Kühllösung (I) mittels einer an den Mischkondensator 11 angeschlossenen Kreislaufleitung 14 und einer Pumpe 20 im Kreislauf geführt wird, wobei in den Kreislauf ein Rückkühler 17 integriert ist.

Der Mischkondensator 11 ist mit dem Mischkondensator 10 durch einer Überlaufleitung verbunden; ebenso ist der Mischkondensator 10 mit dem Mischkondensator 9 durch eine Überlaufleitung 21 verbunden. Die Kühllösung (I), hier 98 %ige Schwefelsäure, wird über eine Leitung 23 in den Mischkondensator 11 eingespeist; die durch die kondensierten Brüden verdünnte Kühllösung (I) wird aus Mischkondensator 9 durch Rohrleitung 24 abgeführt.

Das im Mischkondensator 11 erzeugte Überlaufvolumen wird über Leitung 22 dem Mischkondensator 10 zugeführt; dessen Überlaufvolumen gelangt schließlich über Überlaufleitung 21 in den Mischkondensator 9. Die Konzentration der zur Kühlung verwendeten Schwefelsäure nimmt also von Mischkondensator 11 zum Mischkondensator 9 kontinuierlich ab. In dem hier in Fig. 1 dargestellten Ausführungsbeispiel beträgt die Konzentration der abgeführten Schwefelsäure 75 %.

Die in den Mischkondensatoren freiwerdende Wärme, die sich additiv aus der Kondensationswärme der Brüden und der Mischungswärme der kondensierten Brüden mit der hygroskopischen Kühlflüssigkeit zusammensetzt, wird auf als Oberflächenkühler ausgebildete Rückkühler 15, 16 und 17 übertragen. In dem dargestellten Ausführungsbeispiel werden die Rückkühler mit Wasser zur Erzeugung von Warmwasser, das an einer anderen Stelle des Betriebes wieder verwendet werden soll, beaufschlagt.

Das aufzuwärmende Wasser wird über eine Rohrleitung 25 in den Oberflächenkondensator 15, von dort über Leitung 26 in den Kondensator 16, von dort über Leitung 27 in den Kondensator 17 und von dort schließlich über die Abzugsleitung 28 aus dem Wärmeaustauschsystem abgeführt.

Da das Wasser für die Rückkühler 15, 16 und 17 im Gegenstrom zur Schwefelsäure der Mischkondensatoren geführt wird, sinkt die in den Mischkondensatorkreislaufsystemen eingestellte Temperatur parallel zur Konzentration der in den Mischkondensatorkreislaufsystemen umgewälzten Schwefelsäure von Mischkondensator 11 über Mischkondensator 10 bis zu Mischkondensator 9 ab. Damit wird erreicht, daß die Schwefelsäure mit relativ kleiner Siedepunktserhöhung in den Mischkondensatoren noch wirksam als Kondensationsmedium eingesetzt werden kann.

Besonders zweckmäßig ist es, den wärmsten Brüden, der in dem in Fig. 1 dargestellten Ausführungsbeispiel der Kristallisatorstufe 2 entstammt, in den kältesten Mischkondensatorkreislauf mit einer relativ verdünnten Schwefelsäure einzuleiten und die kältesten Brüden, die aus der Kristallisatorstufe 4 abgezogen werden, in den wärmsten Mischkondensatorkreislauf der konzentriertesten Schwefelsäure einzuführen.

Die einzelnen Mischkondensatoren 9, 10 und 11 werden über Dampfstrahlapparate, die in Fig. 1 nicht dargestellt sind, entlüftet. Dabei kann jedem Mischkondensator je ein Dampfstrahlapparat zugeordnet sein.

Besonders bevorzugt ist eine Ausgestaltung der Erfindung, bei der der wärmste Mischkondensator nicht mit Brüden aus einer Kristallisatorstufe, sondern statt dessen mit der feuchten Abluft der vorgeschalteten Mischkondensatoren gespeist wird. Dieser Mischkondensator, der wegen des relativ kleinen zu kondensierenden Volumens kleiner als die übrigen Mischkondensatoren ausgelegt sein kann, ist an eine Dampfstrahlapparatur angeschlossen. In dieser Weise gelingt es, die von der Dampfstrahlapparatur geförderte Abluft nahezu vollständig zu entwässern, so daß deren Gewicht und damit die von der Dampfstrahlapparatur zu erbringende Förderleistung verringert werden kann, wodurch Energie zum Betreiben der Dampfstrahlapparatur eingespart werden kann.

Wenn nur ein Teil der durch die Brüdenkondensation freiwerdende Wärme zur Warmwassererzeugung bzw. Erwärmung von anderen Betriebsflüssigkeiten rückgewonnen werden soll, können einige der Rückkühler auch zu in Reihe geschalteten Rückkühlerblöcken zusammengefasst werden, die separat mit verschiedenen Kühlmedium (II) beaufschlagt werden.

**Ansprüche**

1. Verfahren zur mehrstufigen Mischkondensation von Dämpfen, wobei jeder Kondensationsstufe ein separater Mischkondensator mit eigenem Mischkondensatorkreislauf für die verwendete Kühllösung (I) und ein als Oberflächenkondensator ausgebildeter Rückkühler, der mit einem Kühlmedium (II) zur Kühlung der im Mischkondensatorkreislauf geführten Kühllösung (I) beaufschlagt wird, zugeordnet, ist,
dadurch **gekennzeichnet**,
daß der Überlauf aus jedem Mischkondensatorkreislauf in den nächstkühleren Mischkondensator (9,10,11) überführt und die überlaufende verdünnte Kühllösung (I) aus dem kältesten Mischkondensatorkreislauf ausgetragen wird, während das Kühlmedium (II) im Rückkühler (15,16,17) jedes Mischkondensatorkreislaufes in den Rückkühler des nächstwärmeren Mischkondensatorkreislaufes überführt und das aufgeheizte Kühlmedium (II) schließlich aus dem Rückkühler (14) des wärmsten Mischkondensatorkreislaufes ausgetragen wird.

2. Verfahren nach Anspruch 1,
dadurch **gekennzeichnet**,
daß die in den wärmsten Mischkondensator (11) eingespeiste Kühllösung (I) eine Siedepunktserhöhung von mindestens 20 °C, insbesondere von mindestens 40 °C aufweist.

3. Verfahren nach Anspruch 1,
dadurch **gekennzeichnet**,
daß die in den wärmsten Mischkondensator (11) eingespeiste Kühllösung (I) eine Siedepunktserhöhung von mindestens 80 °C aufweist.

4. Verfahren nach einem der Ansprüche 1 bis 3,
dadurch **gekennzeichnet**,
daß konzentrierte Schwefelsäure als Kühllösung (I) in den wärmsten Mischkondensator eingespeist wird.

5. Verfahren nach einem der Ansprüche 1 bis 4,
dadurch **gekennzeichnet**,
daß mindestens 90 %ige, insbesondere 97 bis 99 %ige Schwefelsäure als Kühllösung (I) in den wärmsten Mischkondensator eingespeist wird.

6. Verfahren nach einem der Ansprüche 1 bis 5,
dadurch **gekennzeichnet**,
daß die zu kondensierenden Dämpfe aus dem Regenerierungsprozeß von Spinnbadflüssigkeiten aus Viskosespinnanlagen stammen.

7. Verfahren nach einem der Ansprüche 1 bis 6,
dadurch **gekennzeichnet**,
daß die Brüden aus einer mehrstufigen Vakuumkristallisationsanlage stammen und die kältesten Brüden in den wärmsten Mischkondensator (11) und die wärmsten Brüden in den kältesten Mischkondensator (9) der Mischkondensatorkette eingeleitet werden.

8. Verfahren nach einem der Ansprüche 1 bis 7,
dadurch **gekennzeichnet**,
daß in dem wärmsten Mischkondensator (11) die Abluft der übrigen Mischkondensatoren als Brüden zugeführt wird.

9. Anlage zur mehrstufigen Mischkondensation von Dämpfen, wobei jeder Kondensationsstufe ein separater Mischkondensator mit eigenem Mischkondensatorkreislauf für die verwendete Kühllösung (I) und ein als Oberflächenkühler ausgebildeter Rückkühler , der mit einem Kühlmedium (II) zur Kühlung der im Mischkondensatorkreislauf geführten Kühllösung (I) beaufschlagt wird, zugeordnet ist,
dadurch **gekennzeichnet**,
daß jeder Mischkondensator eine Überlaufleitung (21,22) für die Kühllösung (I) zum nächstkühleren Mischkondensatorkreislauf aufweist.

10. Anlage nach Anspruch 9,
**gekennzeichnet** durch
einen vorgeschalteten mehrstufigen Vakuumkristallisator, dessen Brüdenleitungen (6,7,8) stufenweise jeweils mit einem der Mischkondensatoren (9,10,11) in der Weise verbunden sind, daß der kälteste Brüden in den wärmsten Mischkondensator (11) und der wärmste Brüden in den kältesten Mischkondensator (9) der Mischkondensatorkette (9,10, 11) geführt ist.

11. Anlage nach Anspruch 10,
**gekennzeichnet** durch
einen dem Vakuumkristallisator vorgeschalteten Vorkühler, dessen Brüden einem separaten, nicht an die Mischkondensatorkette (9,10,11) angeschlossenen Mischkondensator zuführbar ist.

12. Anlage nach einem der Ansprüche 10 oder 11,

dadurch **gekennzeichnet,**

daß zur Entlüftung der Mischkondensatoren (9,10) diese mit dem wärmsten Mischkondensator (11) über Entlüftungsleitung verbunden sind und der wärmste Mischkondensator an einen Dampfstrahlapparat angeschlossen ist.

13. Verwendung des Verfahrens nach einem der Ansprüche 1 bis 9 zum Erwärmen von Betriebswasser oder regenerierten Spinnbadlösungen.

# FIG 1

Europäisches
Patentamt

**EUROPÄISCHER RECHERCHENBERICHT**

Nummer der Anmeldung

EP 86 10 4918

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 669 393 (EBNER)<br><br>* Seite 2, Absätze 2,3; Seite 4, Absatz 4; Seite 5, Absatz 2 - Seite 6, Absatz 3; Figur * | 1-7,9-11,13 | B 01 D 5/00<br>D 01 F 13/02 |
| | --- | | |
| X | EP-A-0 127 722 (EBNER)<br><br>* Figur 1; Seite 6, Absatz 2 - Seite 9, Absatz 1 * | 1-7,9-11,13 | |
| | --- | | |
| A | US-A-4 287 019 (F.C. STANDIFORD)<br>* Spalte 4, Zeilen 68-67; Spalte 5, Zeilen 51-53; Figur 1 * | 8,12 | |
| | ----- | | RECHERCHIERTE SACHGEBIETE (Int. Cl.4)<br><br>B 01 D<br>D 01 F |

Der vorliegende Recherchenbericht wurde für alle Patentansprüche erstellt.

| Recherchenort | Abschlußdatum der Recherche | Prüfer |
|---|---|---|
| DEN HAAG | 10-12-1986 | VAN BELLEGHEM W.R. |